# DEMANDE DE BREVET EUROPEEN

(11) **EP 1 146 633 A1**
(43) Date de publication de la demande: **17.10.2001**
(21) Numéro de dépôt: 01400899.9
(22) Date de dépôt: 06.04.2001
(51) Int. Cl.: H02P 7/00, H02P 1/44

(54) **Dispositif de commande électromécanique a moteur synchrone temporise**

(30) Priorité: 14.04.2000 FR 0004858
(71) Demandeur: Crouzet Automatismes, 26000 Valence (FR)
(72) Inventeur: Flandin, Denis, 94117 Arcueil Cedex (FR); Hilaire, Jean-François, 94117 Arcueil Cedex (FR)
(74) Mandataire: Guérin, Michel

(57) **Abrégé**

Pour simplifier l'électronique de commande dans le cas où on souhaite que l'actionneur fonctionne entre deux positions stables, on prévoit que les deux enroulements statoriques (L1, L2) du moteur sont alimentés en tension par une source alternative (AC) à travers un commutateur (K) qui aiguille la tension vers l'un ou l'autre des enroulements selon le sens de rotation désirée, et à travers des ponts redresseurs (P1, P2) pourvus chacun d'un composant semiconducteur unidirectionnel (T1, T2). Le composant est commandé par un circuit de temporisation (TMP1, TMP2) qui est déclenché par l'application de la tension alternative au pont dès le basculement du commutateur, et qui coupe la conduction du composant au bout d'une durée déterminée après ce déclenchement.

Application : actionneur linéaire de clapet de vanne hydraulique, dans lequel le mouvement de rotation du moteur est transformé en mouvement linéaire par un système vis/écrou sans utilisation d'interrupteurs de fin de course pour arrêter le moteur.

## Description

L'invention concerne les actionneurs électromécaniques, tels que ceux qu'on peut trouver par exemple pour la commande de vannes, de clapets, de volets, ou pour la mise en pression d'un objet contre un autre.

Elle concerne plus précisément les actionneurs qui peuvent basculer alternativement entre deux positions stables (fonctionnement en tout ou rien), et notamment (mais pas exclusivement) les actionneurs linéaires (organes entraînés en mouvement de translation à partir d'un moteur rotatif). Un exemple d'application de tels actionneurs est la commande de vannes pour les installations de chauffage ou de distribution d'eau chaude sanitaire. Dans cette application, on cherche à faire passer le clapet d'une vanne d'une position stable complètement fermée à une position stable complètement ouverte et inversement.

Dans la technique actuelle, on utilise fréquemment des moteurs synchrones en raison de leur faible coût, de leur fonctionnement assez silencieux, de leur durée de vie importante, et de leur vitesse de rotation bien constante. De plus, ils fonctionnent directement avec une alimentation alternative en 24 Volts, 110 volts, 230 volts, etc. Le mouvement de rotation est converti en translation par une came fixée en bout d'arbre et entraînée en rotation par le moteur. La came entraîne en translation un poussoir de commande depuis une position initiale jusqu'à une position finale.

Dans ce cas, il est facile de placer des interrupteurs de fin de course actionnés par la came pour détecter la position finale où doit s'arrêter le mouvement et pour couper l'alimentation du moteur lorsque cette position est atteinte. Le moteur reste alors en position finale jusqu'à un ordre de commande dans l'autre sens. Lorsque le moteur repart vers la position initiale, la came ne pousse plus sur le poussoir de commande de la vanne, et il faut en général prévoir un ressort de rappel du poussoir (et des organes qu'il commande dans la vanne) vers la position initiale. Le retour à la position initiale est encore détecté par un interrupteur de fin de course actionné par la came, et l'alimentation du moteur est coupée quand cette position est atteinte.

Un inconvénient de ces systèmes est que le moteur doit vaincre, pour partir de la position initiale, non seulement les forces de frottement de toutes les pièces mécaniques mises en jeu dans ce mouvement, mais aussi la force de rappel du ressort. Mais le ressort doit lui-même être assez fort pour vaincre les frottements et autres forces existant à l'arrêt dans la position finale. Ces frottements et forces peuvent être très importants si le système est resté en position finale pendant une longue durée (par exemple toute une saison d'été pour une vanne de chauffage). La vanne tend en effet à rester collée dans la position où elle est restée trop longtemps. Un ressort de force suffisante permet de vaincre cette résistance de collage. Mais plus le ressort est fort, plus le moteur doit être puissant pour le vaincre au départ de la position initiale.

Un but de l'invention est donc d'éviter l'utilisation de systèmes utilisant un ressort de rappel de la position finale vers la position initiale.

Par ailleurs, même si un système à cames et à interrupteurs de fin de course donne généralement satisfaction lorsqu'il est bien conçu, un tel système peut difficilement être modifié pour servir à une autre application (par exemple une application dans laquelle la longueur de course du poussoir ne serait pas la même). Un autre but de l'invention est donc de proposer un système qui ait de plus grandes facilités de modification en fonction des applications.

On propose selon l'invention d'utiliser au mieux le fait qu'un moteur synchrone tourne à vitesse constante, et de commander l'alimentation du moteur, dans chaque sens, au moyen d'un circuit de temporisation, pendant une durée à peu près fixe, dépassant la durée strictement nécessaire pour que l'organe actionné en translation par le moteur ait certainement atteint sa position finale. Il n'y a pas de détection de fin de course et le moteur reste alimenté légèrement au-delà de la durée strictement nécessaire, puis l'alimentation se coupe.

D'autre part, on utilise de préférence comme moyen de conversion du mouvement de rotation en mouvement de translation un mécanisme qui est activement entraîné par le moteur dans les deux sens et qui ne nécessite donc pas de ressort de rappel dans l'un des deux sens. Typiquement, le moyen de conversion de rotation en translation actif dans les deux sens est une vis coopérant avec un écrou : l'entraînement de l'un par l'autre est actif dans les deux sens de rotation.

Par ailleurs, on souhaite réaliser le plus simplement possible une électronique de commande telle que le moteur arrivé dans l'une des deux positions stables soit préparé à recevoir un ordre de passage à l'autre position stable, cet ordre consistant simplement en l'inversion d'un commutateur inséré entre une source de tension alternative d'alimentation et le moteur, et le déclenchement de la temporisation correspondante se faisant immédiatement lors de cette inversion du commutateur, c'est-à-dire lors de l'application de la tension d'alimentation au moteur.

A ce propos on rappelle qu'un moteur synchrone comprend en général deux enroulements statoriques ayant une borne commune d'un côté et deux bornes distinctes reliées par un condensateur de démarrage de l'autre côté. Le choix du sens de rotation consiste à choisir celui des deux enroulements auquel on appliquera directement la tension d'alimentation. Le commutateur mentionné ci-dessus sert donc à commuter d'un enroulement à l'autre l'application directe de la source alternative.

L'objet de la présente invention est donc un dispositif de commande électromécanique, comprenant un moteur synchrone à au moins deux enroulements, destiné à être alimenté par une source de tension alternative, un commutateur de changement de sens du moteur, relié entre la source de tension alternative d'une part et chacun des deux enroulements d'autre part, pour alimenter directement l'un ou l'autre des enroulements selon le sens de rotation désiré, caractérisé en ce qu'il est prévu deux ponts redresseurs à diodes, correspondant chacun à un des deux enroulements, chaque pont étant inséré par une de ses diagonales, dite diagonale alternative, parcourue par un courant alternatif, en série entre une borne respective du commutateur et l'enroulement correspondant, le pont ayant une autre diagonale, dite diagonale continue, parcourue par un courant continu, un composant semiconducteur étant placé dans cette diagonale continue et pouvant être bloqué pour interdire le passage de courant de la source de tension alternative vers l'enroulement correspondant, et un circuit de temporisation, déclenché par l'application de la tension alternative au pont, étant prévu pour commander le composant semiconducteur de manière à le rendre conducteur dès l'application d'une tension alternative au pont redresseur et pour le bloquer au bout d'un temps prédéterminé après l'application de la tension alternative.

Il résulte de cette disposition que lorsque l'organe de commande entraîné par le moteur dans un sens a atteint une de ses positions stables, le moteur s'arrête sous l'effet du circuit de temporisation incorporé au premier pont redresseur. Dès que le commutateur bascule dans l'autre position, appliquant une tension à l'autre pont, le moteur démarre dans le sens inverse, déclenchant en même temps une temporisation qui l'arrête au bout d'une durée prédéterminée. La durée est calculée pour que l'organe de commande atteigne sa deuxième position stable (la vitesse du moteur est connue puisqu'il s'agit d'un moteur synchrone) ; une marge de sécurité est prévue pour que le moteur ne s'arrête pas avant d'avoir atteint l'autre position stable. Le moteur est alors prêt pour un nouveau basculement du commutateur.

Etant donné que le circuit de temporisation pourra avantageusement utiliser un circuit de type résistance condensateur (RC), on prévoit de préférence que le passage du courant dans l'un des ponts déclenche la réinitialisation de la charge du condensateur du circuit de temporisation associé à l'autre pont. En effet, la temporisation démarre à partir d'un état initial dans lequel on doit se replacer à chaque fois. Cette réinitialisation peut être faite par exemple en court-circuitant le condensateur (état initial à charge nulle du condensateur). Un photocoupleur, activé par le passage du courant dans un pont, peut court-circuiter le condensateur de l'autre pont. Ce photocoupleur est de préférence placé dans la diagonale continue du premier pont pour être activé par le passage d'un courant continu dans cette branche, ce courant continu résultant de la mise en conduction du composant semiconducteur de cette branche. Plus généralement, le photocoupleur est placé de manière à être activé par le basculement de l'interrupteur K.

Ainsi, de préférence, en même temps qu'on démarre l'alimentation du moteur dans un sens, à travers un pont, on initialise le circuit de temporisation de l'autre pont, préparant ainsi le démarrage du moteur, avec fonctionnement temporisé, dans l'autre sens.

Le dispositif de commande ainsi réalisé est simple, peu coûteux et peu encombrant, l'électronique de commande pouvant facilement être intégrée dans l'actionneur.

D'autres caractéristiques et avantages de l'invention apparaîtront à la lecture de la description détaillée qui suit et qui est faite en référence aux dessins annexés dans lesquels :
la figure 1 représente un schéma de principe d'actionneur électromécanique selon l'invention ;
la figure 2 représente le détail d'un circuit de temporisation utilisé dans l'invention ;
la figure 3 représente une courbe de variation de la tension appliquée aux bornes du moteur après un ordre de démarrage.
la figure 4 représente une variante de réalisation de la figure 2.

Le dispositif d'actionnement selon l'invention comprend un moteur synchrone, un circuit électronique de commande, et de préférence un circuit de conversion de mouvement rotatif en mouvement de translation tel qu'un système vis/écrou qui a la propriété de pouvoir être entraîné activement dans un sens comme dans l'autre, à vitesse constante. Le dispositif déplace alors un organe d'actionnement qui peut par exemple pousser ou tirer un clapet de vanne hydraulique.

Sur les figures, seul le moteur synchrone est représenté, avec son électronique de commande.

Le moteur comprend essentiellement deux enroulements statoriques L1, L2 ayant d'un côté une borne commune destinée à être reliée à une des bornes A de la source de tension alternative AC qui alimente l'actionneur. Les enroulements ont par ailleurs classiquement chacun une autre borne d'extrémité B1 pour l'enroulement L1, et B2 pour l'enroulement L2, ces deux bornes étant reliées l'une à l'autre par un condensateur de démarrage C. La commande de sens de rotation du moteur s'effectue en sélectionnant l'une des bornes B1 et B2 pour relier directement l'un des enroulements, L1 ou L2, à la deuxième borne D de la source de tension alternative. Un commutateur K est interposé entre la borne D et les bornes B1 et B2 pour effectuer l'aiguillage de la tension alternative de la borne D vers la borne B1 ou vers la borne B2.

Un pont redresseur P1 est interposé en série entre l'une des sorties du commutateur K et la borne B1, et un pont redresseur P2 est interposé symétriquement entre l'autre sortie du commutateur et la borne B2.

Les ponts sont des ponts à quatre diodes, ayant chacun une diagonale dite « alternative », entre les extrémités de laquelle le courant peut circuler dans les deux sens, et une diagonale dite « continue », entre les extrémités de laquelle le courant ne peut circuler que dans un sens déterminé. Le courant ne peut passer dans la diagonale alternative qu'à travers la diagonale continue, de sorte que le contrôle du courant continu dans la diagonale continue permet le contrôle du courant alternatif dans la diagonale alternative.

Les ponts sont insérés par leur diagonale alternative entre le commutateur et la borne B1 ou B2 respectivement. Un composant semiconducteur commandable est placé dans la diagonale continue et contrôle le courant dans cette diagonale, donc contrôle le passage du courant de la source d'alimentation alternative vers la borne B1 ou B2 respectivement.

Le composant semiconducteur est de préférence un transistor MOS (T1 pour le pont P1, et T2 pour le pont P2) capable de supporter d'une part la totalité de la tension d'alimentation alternative, d'autre part le courant nécessaire à l'alimentation des moteurs. Dans la réalisation préférée du circuit de commande, le transistor doit également être capable de dissiper une puissance importante puisqu'il fait chuter la tension d'alimentation du moteur tout en étant parcouru par le courant nécessaire à ce dernier.

Enfin, un circuit de temporisation est prévu pour commander le transistor (circuit TMP1 pour le transistor T1 du pont P1 et circuit TMP2 pour le transistor T2 du pont P2). Le circuit de temporisation est déclenché automatiquement par l'application de la tension alternative au pont redresseur correspondant. Ce circuit de temporisation rend immédiatement conducteur le transistor qu'il commande, et il maintient cette conduction pendant une durée prédéterminée, après laquelle le transistor se bloque et l'enroulement correspondant cesse d'être alimenté.

Ainsi, le commutateur K, lorsqu'il bascule dans une première position, déclenche l'alimentation de l'enroulement L1, donc la rotation du moteur synchrone (à vitesse constante) pendant une durée déterminée dans un premier sens, après quoi le moteur s'arrête, l'enroulement L1 cessant d'être alimenté du fait du blocage du transistor T1 et l'enroulement L2 n'étant pas alimenté du fait de la position du commutateur K.

Le basculement du commutateur de la première position vers la deuxième position déclenche le circuit de temporisation TMP2, donc l'alimentation de l'enroulement L2, la rotation du moteur dans l'autre sens, et, au bout d'un temps prédéterminé, l'interruption par le transistor T2 du courant d'alimentation du moteur. Le moteur s'arrête dans sa deuxième position.

On notera que le commutateur K n'a besoin que de deux positions, correspondant aux deux sens de rotation du moteur. Il n'a pas besoin d'avoir une position neutre pour l'arrêt du moteur.

Le circuit de temporisation peut être plus ou moins complexe selon la forme de variation désirée pour la tension et le courant d'alimentation du moteur pendant la durée d'alimentation.

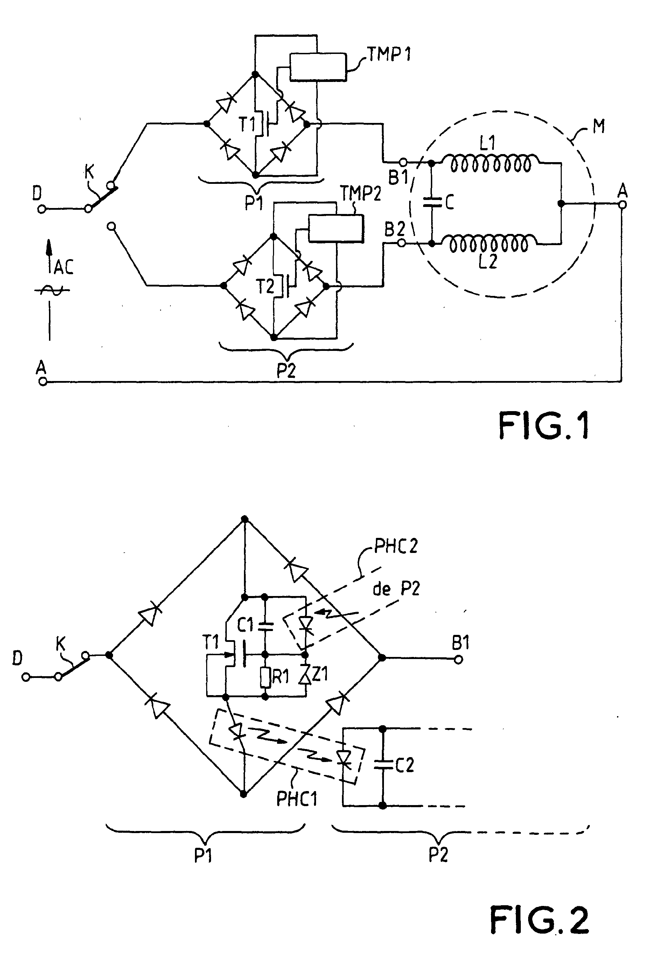

La figure 2 représente un exemple préféré de réalisation du circuit de temporisation, qui a l'avantage d'être très simple, du fait qu'il repose sur l'utilisation d'un circuit à résistance et capacité pour modifier progressivement l'état de conduction du transistor qu'il commande. Le circuit a la particularité d'établir d'abord une tension d'alimentation élevée sur les enroulements, ce qui est favorable au démarrage du moteur (pour vaincre les frottements secs et les forces de collage éventuelles dans les organes entraînés). La tension appliquée à l'enroulement se réduit ensuite progressivement jusqu'à zéro, pendant une durée qu'on peut régler notamment par un choix approprié de la résistance et de la capacité. La réalisation décrite produit une décroissance linéaire de la tension en fonction du temps. On pourrait choisir d'autres circuits de temporisation, éventuellement plus complexes, si on voulait une courbe de décroissance différente de la tension aux bornes du moteur.

Le circuit de temporisation TMP1 de la figure 1 comprend une capacité C1 en parallèle entre drain et grille du transistor T1, et une résistance R1 en parallèle entre grille et source du transistor.

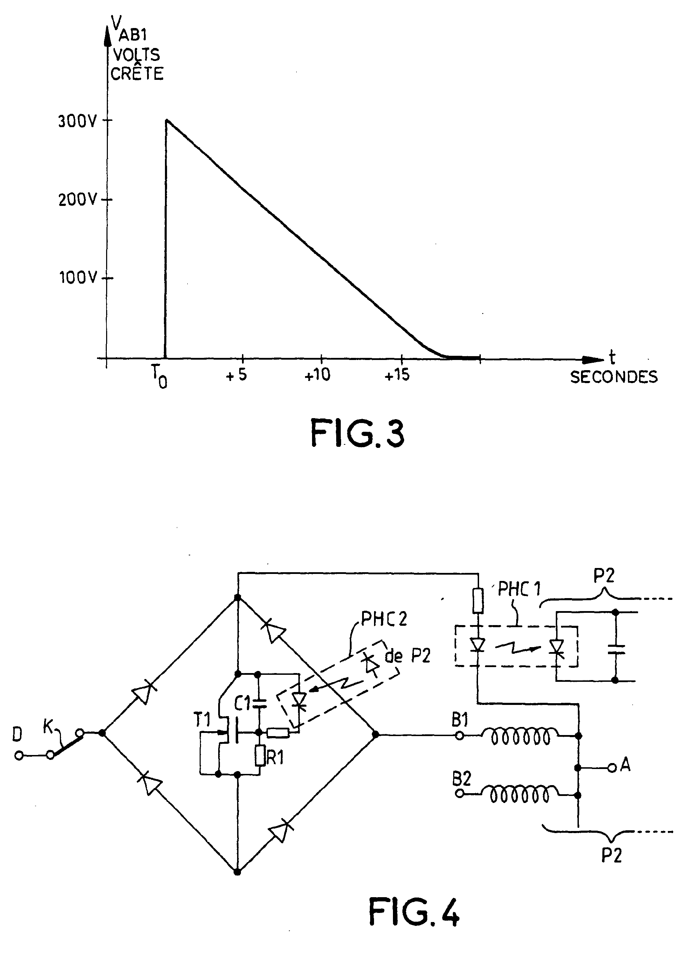

La figure 3 représente la courbe de variation de la tension d'alimentation du moteur lors du basculement de l'interrupteur K vers la position où il alimente l'enroulement L1 à travers le pont redresseur P1. A l'instant T0 du basculement, la capacité C, initialement déchargée, transmet sur la grille du transistor T1 une tension suffisamment forte pour le faire conduire immédiatement et fortement. La tension Vds entre drain et source du transistor est faible et la tension de la source d'alimentation AC est appliquée en quasi-totalité à l'enroulement L1 (environ 300 volts crête pour une alimentation classique de 220 volts efficaces).

Puis, la capacité C1 se charge progressivement, et la tension Vds aux bornes du transistor croît sensiblement linéairement avec une pente qui dépend du courant de charge de la capacité. La tension VAB1 aux bornes de l'enroulement L1, qui est la différence entre la tension d'alimentation AC et la chute de tension Vds introduite par le transistor, décroît sensiblement linéairement.

Cette croissance sensiblement linéaire de la tension Vds aux bornes du transistor s'explique du fait que la tension grille-source Vgs est sensiblement constante pour un courant sensiblement constant consommé par le moteur. Le courant de charge de la capacité est égal à Vgs/R1, qui est également sensiblement constant, d'où une croissance linéaire de la tension Vc aux bornes du condensateur. Or Vds = Vc + Vgs. Comme Vgs est faible et sensiblement constant, Vds croît linéairement comme Vc.

Au bout d'une durée prédéterminée, la tension aux bornes de la capacité C1 tend à se rapprocher de la tension drain-source Vds du transistor, réduisant alors la tension grille-source de celui-ci jusqu'à le bloquer. Le circuit reste alors dans un état stable où l'enroulement L1 ne reçoit plus ni courant ni tension.

La durée de fonctionnement du moteur à partir de l'instant T0 dépend essentiellement de la valeur de la capacité et du courant de charge Vgs/R1 de celle-ci. La tension Vgs dépend du courant moyen consommé par le moteur en fonctionnement (par exemple typiquement Vgs = 3 volts pour un courant de 10 milliampères si le transistor est correctement choisi).

Typiquement, si la capacité a une valeur de 0,5 microfarads et la résistance une valeur de 300 kilohms, avec Vgs = 3 volts en moyenne, on peut obtenir une décroissance régulière de la tension VAB1 en dix à vingt secondes environ, ce qui convient parfaitement pour des applications telles que la commande motorisée d'une vanne ou d'un clapet : une partie de cette durée est utilisée pour déplacer le clapet d'une position ouverte à une position fermée, puis le moteur continue à fournir un couple de mise en pression du clapet sur son siège, et enfin le moteur s'arrête progressivement.

Il est important de constater que la tension d'alimentation appliquée au moteur est maximale au départ ; le couple moteur est donc plus important au départ, ce qui facilite le démarrage, en particulier en présence de frottements secs ou de collages qui ordinairement s'opposent au démarrage. On peut d'ailleurs prévoir une tension d'alimentation plus élevée que la tension nominale de fonctionnement du moteur puisque la tension maximale n'est appliquée qu'au départ et est déjà réduite de 30% au bout de quelques secondes. Les risques d'échauffement anormal du moteur sont réduits.

Le circuit de la figure 2 comprend encore de préférence une diode zener Z1 en parallèle entre grille et source du transistor T1 pour éviter l'application d'une tension trop élevée entre grille et source au moment du basculement initial du commutateur, alors que la capacité C1 est complètement déchargée.

Enfin, on prévoit de préférence un moyen pour décharger la capacité afin de réinitialiser le circuit en vue d'un nouveau déplacement du moteur. Pour réaliser automatiquement cette réinitialisation, le mieux est de prévoir que l'actionnement du moteur dans l'autre sens (par alimentation de l'enroulement L2 lors du basculement du commutateur K dans sa deuxième position) déclenche la réinitialisation du circuit d'alimentation de l'enroulement L1.

Une possibilité simple pourrait consister à coupler le commutateur K à un autre commutateur qui viendrait court-circuiter la capacité C1. Ou encore on pourrait utiliser un thyristor en parallèle sur la capacité et des moyens pour donner une impulsion de mise en conduction de ce thyristor lors du basculement du commutateur dans l'autre position.

Selon une solution originale, on propose ici de préférence d'utiliser un photocoupleur (du type photothyristor) dont la partie de commande (diode électroluminescente) est placée dans la diagonale continue d'un pont et dont la partie commandée (photothyristor activé par la lumière de la diode) est placée en parallèle sur la capacité de l'autre pont. Ainsi, dès que l'un des ponts est alimenté en tension lors du basculement du commutateur K, l'autre pont est réinitialisé et prêt pour un nouveau fonctionnement. Sur la figure 2, on voit le photocoupleur PHC1 du pont P1 qui peut court-circuiter la capacité du pont P2, et le photocoupleur PHC2 du pont P2 qui vient court-circuiter la capacité C1 du pont P1.

## Revendications

1. Dispositif de commande électromécanique, comprenant un moteur synchrone (M) à au moins deux enroulements (L1, L2), destiné à être alimenté par une source de tension alternative (AC), un commutateur (K) de changement de sens du moteur relié entre la source de tension alternative d'une part et chacun des deux enroulements d'autre part pour alimenter directement l'un ou l'autre des enroulements selon le sens de rotation désiré, **caractérisé en ce qu'**il est prévu deux ponts redresseurs à diodes (P1, P2) correspondant chacun à un des deux enroulements, chaque pont étant inséré par une de ses diagonales, dite diagonale alternative, parcourue par un courant alternatif, en série entre une borne respective du commutateur et l'enroulement correspondant, le pont ayant une autre diagonale, dite diagonale continue, parcourue par un courant continu, un composant semiconducteur (TT1, T2) étant placé dans cette diagonale continue et pouvant être bloqué pour interdire le passage de courant de la source de tension alternative vers l'enroulement correspondant, et un circuit de temporisation (TMP1, TMP2), déclenché par l'application de la tension alternative au pont, étant prévu pour commander le composant semiconducteur de manière à le rendre conducteur dès l'application d'une tension alternative au pont redresseur et pour le bloquer au bout d'un temps prédéterminé après l'application de la tension alternative.

2. Dispositif selon la revendication 1, **caractérisé en ce que** le circuit de temporisation (TMP1) de chaque pont (P1) comporte un circuit à résistance et condensateur (R1, C1), et **en ce qu'**il est prévu des moyens (PHC2) pour court-circuiter le condensateur afin de le décharger, ces moyens étant commandés par le passage de courant dans l'autre pont (P2) de manière que la mise en service d'un pont (P1) utilisé pour un sens de fonctionnement du moteur déclenche la réinitialisation du deuxième pont (P2) qui est prévu pour l'autre sens de fonctionnement, et réciproquement.

3. Dispositif selon la revendication 2, **caractérisé en ce qu'**il est prévu deux photocoupleurs (PHC1, PHC2), commandés par le passage du courant dans chacun des deux enroulements respectivement, chaque photocoupleur court-circuitant le condensateur du circuit de temporisation correspondant au pont placé en série avec l'autre enroulement.

4. Dispositif selon la revendication 3, **caractérisé en ce que** la partie émettrice d'un premier photocoupleur (PHC1, fig. 3) est placée dans le premier pont (P1), en série avec le composant semiconducteur de ce pont, dans la diagonale parcourue par un courant continu.

5. Dispositif selon l'une des revendications 1 et 2, **caractérisé en ce qu'**il est prévu deux photocoupleurs (PHC1, PHC2), commandés par la mise sous tension de chacun des ponts respectivement, chaque photocoupleur court-circuitant le condensateur du circuit de temporisation correspondant à l'autre pont.

6. Dispositif selon la revendication 5, **caractérisé en ce que** la partie émettrice d'un premier photocoupleur (PHC1, fig 4) est reliée à une extrémité de diagonale continue d'un pont pour être alimentée lors de l'alimentation de ce pont.

7. Dispositif selon l'une des revendications précédentes, **caractérisé en ce que** le composant semiconducteur est un transistor ayant deux électrodes principales et une électrode de commande et le circuit de temporisation comprend un ensemble d'une capacité en série avec une résistance, l'ensemble en parallèle avec le transistor entre les deux électrodes principales, le point de jonction entre la résistance et la capacité étant relié à l'électrode de commande.

8. Dispositif selon la revendication 7, **caractérisé en ce que** le transistor est un transistor MOS et la capacité est connectée entre drain et grille de commande du transistor.

9. Dispositif selon l'une des revendications précédentes, **caractérisé en ce que** le moteur synchrone possède un arbre pourvu d'une vis permettant de convertir le mouvement de rotation en mouvement de translation.

10. Dispositif selon l'une des revendications précédentes, **caractérisé en ce que** le commutateur est un commutateur à deux positions seulement.
